# EUROPÄISCHE PATENTANMELDUNG

(11) **EP 3 649 856 A1**
(43) Veröffentlichungstag der Anmeldung: **13.05.2020**
(21) Anmeldenummer: 19208420.0
(22) Anmeldetag: 12.11.2019
(51) Int. Cl.: A01K 11/00, A01K 27/00

(54) **TIERVORRICHTUNG**

(30) Priorität: 12.11.2018 DE 102018128204
(71) Anmelder: Förster Technik GmbH, 78234 Engen (DE)
(72) Erfinder: FÖRSTER, Thomas, 78351 Bodman-Ludwigshafen (DE)
(74) Vertreter: Patentanwälte und Rechtsanwalt Weiß, Arat & Partner mbB

(57) **Zusammenfassung**

Die Erfindung betrifft eine Tiervorrichtung mit einer Elektronik, wobei die Elektronik (1) eine Gurthalterung (2) und einen Gurt (3), wobei die Gurthalterung (2) aus einem ersten Teil (4) und einem zweiten Teil (5) besteht, wobei das erste Teil (4) eine Gurteinschubmulde (6) aufweist, in welcher der Gurt (3) aufnehmbar ist, wobei das zweite Teil (5) komplementär zu dem ersten Teil (4) ausgebildet ist und in Arbeitslage die Gurteinschubmulde (6) verschliesst.

## Beschreibung

### Technisches Gebiet

Die Erfindung betrifft eine Tiervorrichtung nach dem Oberbegriff des Anspruchs 1.

### Stand der Technik

Derartige Tiervorrichtungen sind bereits in vielfältiger Form und Ausgestaltung bekannt und gebräuchlich. So wird beispielsweise in der DE 10 2016 107 624 A1 eine Tiervorrichtung offenbart. Die Besonderheit hierbei ist der Umstand, dass eine einstellbare Anzeigeeinrichtung an einem Tierhals mit einem Gurt befestigbar ist und entsprechende Informationen des Tieres in der Anzeigeeinrichtung wiedergegeben werden.

### Aufgabe der Erfindung

Die Aufgabe der vorliegenden Erfindung ist es, eine Tiervorrichtung zur Verfügung zu stellen, welche auf einfache Art und Weise mit einem Gurt verbindbar und lösbar ist, damit der Gurt besser gereinigt werden kann, ohne dass die Elektronik in der Tiervorrichtung davon beeinträchtigt werden kann.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemässe Tiervorrichtung weist eine Elektronik auf. Dabei kann es sich um eine Anzeigevorrichtung und/oder GPS-Ortung oder dergleichen handeln, die eine autarke Energiequelle in Form eines Akkus aufweisen kann. Dabei soll es sich bei der Tiervorrichtung nicht nur darum gehen, dass eine Information "angezeigt" wird, sondern es kann auch sein, dass es sich bei der Elektronik um einen reiner Sensor für Tierdaten (z.B. Aktivität) handeln kann. Es kann auch beispielsweise ein Pedometer, Mikrofon, Thermometer, Lokalisation oder dergleichen sein.

Die Tiervorrichtung kann dabei auch dazu geeignet sein, eine "Information" über einen Kommunikationskanal zu einer übergeordneten Einheit per Infra-Rot Datenübertragung oder dergleichen zu versenden oder auch zu empfangen, wobei dann die Ausrichtung zu einem Sender/Empfänger notwendig wäre.

Die Elektronik weist eine Gurthalterung auf, in den ein Gurt aufnehmbar ist. Der Gurt dient der Anbringung an einem Tierhals, Tierbauch, Tierschwanz, Tierbein oder dergleichen.

Dabei besteht die Gurthalterung aus einem ersten Teil und einem zweiten Teil, wobei das erste Teil eine Gurteinschubmulde aufweist, in welcher der Gurt aufnehmbar ist. Dabei ist das zweite Teil komplementär zu dem ersten Teil ausgebildet ist und verschliesst in Arbeitslage die Gurteinschubmulde. Verschliessen bedeutet hierbei, dass der aufgenommene beziehungsweise eingeschobene Gurt mit der Gurthalterung verbindbar ist. Das Verschliessen kann jederzeit manuell oder durch ein Werkzeug beziehungsweise einen Schlüssel revidiert werden. Dadurch erhöht sich der Tragekomfort für das Tier, da nicht unnötig lange an dem Gurt herum hantiert werden muss, um ihn zu öffnen, wenn die Elektronik beispielsweise gewartet, geladen oder ausgetauscht werden muss, kann auf einfache Art und Weise geschehen, da der Gurt beispielsweise am Tier verbleiben könnte.

Arbeitslage liegt dann vor, wenn das erste Teil mit dem zweiten Teil verbunden ist und somit der Gurt an der Gurthalterung verbunden ist. Die Ruhelage liegt dann vor, wenn das erste Teil von dem zweiten Teil gelöst wird und der Gurt bspw. für Reinigungszwecke entnommen werden kann. Dabei wird die Elektonik geschont und der Gurt kann beispielsweise einfach in eine Waschmaschine geworfen werden.

Das erste Teil besteht unter anderem aus einer ersten Gurtführung, einer zweiten Gurtführung und einer zwischen den beiden Gurtführungen liegenden Unterbrechung besteht.

Weiter ist das zweite Teil T-förmig ausgebildet. Es besteht aus einem Druckstück und einem mittig an dem Druckstück im rechten Winkel angeordneten und abstehenden Verschlusssteg. Dabei ist an dem Verschlusssteg andernends des Druckstücks ein Clipsverschluss angeordnet. Der Clipsverschluss besteht aus zwei federnden Stiften mit endseitig angeordneten Verschlussteilen.

Die Gurthalterung weist im Bereich der Unterbrechung eine Clipsführung auf. Die Clipsführung besteht aus zwei parallel angeordneten Führungsstegen. Um von der Ruhelage in die Arbeitslage zu bringen, wird der Verschlusssteg zwischen die beiden Führungsstege geführt und soweit eingeschoben bis die beiden Verschlussteile aus den beiden Führungstegen herausgleiten und nach Passieren einer Clipsöffnung aufgrund der federnden Stifte expandieren und ein Rückgleiten verhindern.

Die beiden Führungsstege sind einends in Arbeitslage mit dem Druckstück in Kontakt und andernends mit der Clipsöffnung, wobei in Arbeitslage der Clipsverschluss in die Clipsöffnung eingeführt ist.

Die beiden Gurtführungen weisen jeweils eine Sitftaufnahme auf, welche mit Führungsstiften des Druckstücks in Arbeitslage verbindbar sind. Die Stiftaufnahme und die Führungsstifte vereinfachen die Justage der beiden Teile zueinander.

In einem bevorzugten Ausführungsbeispiel verläuft der Gurt derart, dass er zwischen den beiden Führungsstegen und den beiden Gurtführungen angeordnet ist.

Der Schlüssel weist eine Kreisausnehmung und eine U-Ausnehmung auf. Die U-Ausnehmung wird auf die in Arbeitslage expandierten Verschlussteile aufgeschoben, um die beiden Verschlussteile zueinander hin drückt. Dadurch wird ermöglicht, dass die beiden Verschlussteile durch die Clipsöffnung zurückgleuten können und damit der erste Teil von dem zweiten Teil gelöst werden kann.

Dabei können die Verschlussteile so gestaltet sein, dass sie von Hand zusammengedrückt werden können. Das bedeutet sie sind händisch zugänglich gestaltet. Das wiederum bedeutet, dass die Verschlussteile in Arbeitslage groß genug sind und auch soweit aus der Clipsöffnung ragen, dass man sie mit den Fingern zusammendrücken kann.

In einem anderen Ausführungsbesispiel liegen die Verschlussteile derart an der Clipsöffnung an, dasss sie nicht händisch geöffnet werden können. Das kann beispielsweise an einer geschützten Lage liegen oder dem Umstand, dass die Verschlusstelie schlicht zu klein ausgeführt sind. Hier wäre der Vorteil, dass sich die Verschlussteile nicht ungewollt durch einen Strauch oder durch das Tier selbst zusammendrücken lassen würden, weil sie keinen entsprechenden Angriffsraum bieten. Dann ist der beschriebene Schlüssel notwendig, um ein Öffnen zu ermöglichen und die Arbeitslage zu verlassen.

Zum Reinigen des Gurtes kann die Elektronik leicht vom Gurt abgenommen werden, und der Gurt kann z.B. in eine Waschmaschine gegeben werden. Danach kann die Elektronik wieder leicht und ohne Einfädeln bzw. Wegfädeln der anderen "Bauteile" wie Nummern oder dergleichen am Gurt eingebracht werden. Das Anbringen und Lösen der Elektronik ist auch möglich während der Gurt am Tier verbleibt. Das ist auch wichtig bei einer eventuellen Nachrüstung, oder falls die Elektronik nur für bestimmte Zeitabschnitte von Nutzen ist (z.B. Brunfterkennung) und dann für ein anderes Tier verwendet werden soll. Dies kann beispielsweise auch zum Aufladen eines Akkus hilfreich sein. Weiter ist von Vorteil, dass der Tragekomfort für das Tier im Vergeich zum Stand der Technik erhöht wird. Beispielsweise weist die Tiervorrichtung einen geringere Bauhöhe auf, als dies im Stand der Technik der Fall ist, wenn beispielsweise eine Befestigung mit Schraubkonstruktionen erreicht wird, die regelmäßig zu Druckstellen bei den Tieren führt. Druckstellen werden in der erfindungsgemäßen Tiervorrichtung verhindert.

Ein weiterer Vorteil der erfindungsgemässen Tiervorrichtung liegt darin, dass die Elektronik ganz ohne Einfädeln sowohl dann befestigt werden, wenn der Gurt am Tier befestigt ist, als auch, wenn der Gurt (bspw. zu Reinigungszwecken) abgenommen wurde und lose herumliegt.

Wesentlicher Vorteil ist, dass ein Einfädeln entfällt. Da der Gurt meist noch weitere Teile trägt, wie ein RFID-Tag, oder eine Nummer, etc. und die erfindungsgemässe Tiervorrichtung oftmals zwischen vorhandene Teilen eingefügt werden soll, müssen diese nicht extra abgenommen werden, um anschliessend die erfindungsgemässe Tiervorrichtung und dann wieder das zuvor abgenommene Teil einzufädeln. Dieser Vorteil tritt besonders dann zu Tage, wenn beispielsweise eine erfindungsgemässe Tiervorrichtung umfassend teure Elektronik nachgerüstet werden soll.

Einerseits könnte ein Landwirt, der seine Tiere schon mit Gurten ausgestattet hat, das nachträglich gekaufte Teil ohne Einfädeln auf einfache Weise nachrüsten. Andererseits kann ein Landwirt besonders teure und nur selten gebrauchte Teile immer am Gurt derjenigen Tiere befestigen, die es gerade brauchen. So trägt eine Kuh im Jahr 9 Monate und ist dann drei Monate empfänglich um wieder trächtig zu werden. Die teure Sensorik zur Brunft-Erfassung ist natürlich nur in den genannten drei Monaten nötig. Hierbei ist es besonders vorteilhaft, wenn die teure Sensorik, nachdem eine Kuh trächtig geworden ist, wieder entnommen werden kann, um sie einer anderen Kuh zuzuordnen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: zeigt eine Tiervorrichtung in Arbeitslage ohne eingezogenen Gurt;
- Figur 2: zeigt die Tiervorrichtung aus Figur 1 in Ruhelage;
- Figur 3: zeigt die Tiervorrichtung aus den Figuren 1 und 2 in Arbeitslage mit eingezogenem Gurt;
- Figur 4: zeigt dieTiervorrichtung in Arbeitslage;
- Figur 5: zeigt die Tiervorrichtung in Ruhelage.

### Ausführungsbeispiel

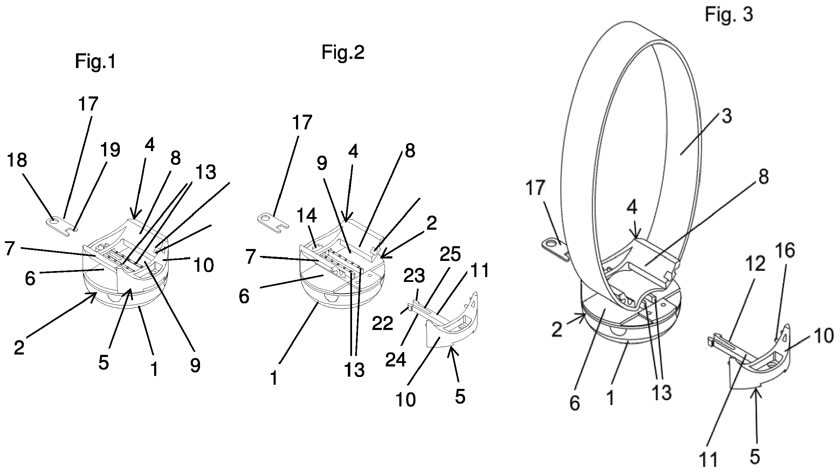

In Figur 1 ist eine Tiervorrichtung in Arebitslage mit einer Elektronik 1 gezeigt. Dabei ist die Elektronik 1 mit eine Gurthalterung 2 verbunden. Die Gurthalterung 2 besteht aus einem ersten Teil 4 und einem zweiten Teil 5.

Das erste Teil weist eine Gurteinschubmulde 6 auf, in welcher ein Gurt 3, wie er in Figur 3 gezeigt ist, aufnehmbar ist. Dabei ist das zweite Teil 5 komplementär zu dem ersten Teil 4 ausgebildet und legt in Arbeitslage die den Gurt 3 in der Gurteinschubmulde 6 fest. Dabei wird die Gurteinschubmulde 6 verschlossen.

Das erste Teil 4 besteht weiter aus einer ersten Gurtführung 7 und einer zweiten Gurtführung 8, wobei zwischen den beiden Gurtführungen 7, 8 eine Unterbrechung 9 vorhanden ist.

Weiter ist ein Schlüssel 17 gezeigt, welcher eine Kreisausnehmung 18 und eine U-Ausnehmung 19 aufweist. Die Kreisausnehmung dient der besseren Handhabbarkeit oder bspw zur Anbringung an einem Schlüsselring. Die U-Ausnehmung dient dem Entriegeln des zweiten Teils 5 von dem ersten Teil 4.

In Figur 2 ist die Tiervorrichtung in Ruhelage dargestellt. Dabei ist das zweite Teil 5 T-förmig ausgebildet. Dabei besteht das zweite Teil 5 aus einem Druckstück 10 und einem mittig an dem Druckstück 10 im rechten Winkel angeordneten Verschlusssteg 11, wobei an dem Verschlusssteg 11 andernends des Druckstücks 10 ein Clipsverschluss 12 angeordnet ist. Der Clipsverschluss 12 besteht dabei aus zwei federnden Stegen 24, 25 mit je einem Verschlussstück 22, 23.

Die Gurthalterung 2 weist im Bereich der Unterbrechung 9 eine Clipsführung, bestehend aus zwei parallel angeordneten Führungsstegen 13 auf. Die beiden Führungsstege 13 sind einends in Arbeitslage mit dem Druckstück 10 in Kontakt und andernends ist eine Clipsöffnung 14 vorhanden, wobei in Arbeitslage der Clipsverschluss 12 in die Clipsöffnung 14 eingeführt ist.

Die beiden Gurtführungen 7, 8 weisen jeweils eine Sitftaufnahme 15 auf, welche mit Führungsstiften 16 des Druckstücks 10 in Arbeitslage verbindbar sind.

In Figur 3 ist der Gurt 3 derart angeordnet, dass er zwischen den Führungsstegen 13 und den beiden Gurtführungen 7, 8 angeordnet ist. Das Einfädeln ist in einfacher Weise durch das abnehmbare zweite Teil 5 möglich. In Arbeitslage sitzt der eingefädelte Gurt 3 fest und kann sich nicht ungewollt lösen.

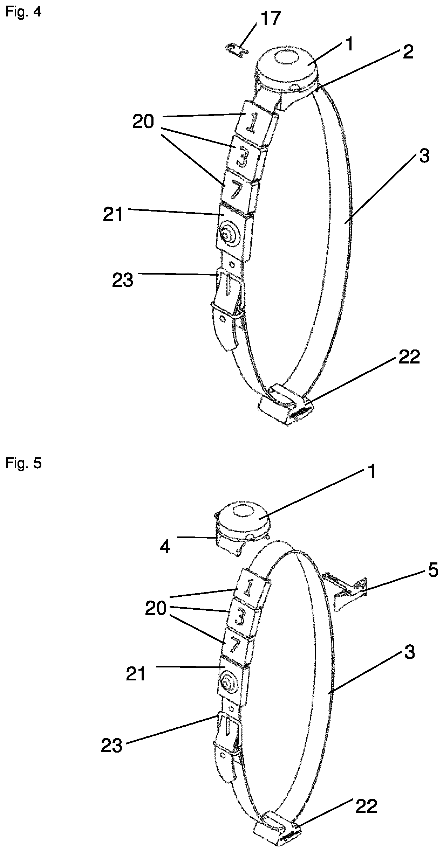

Figur 4 zeigt die Tiervorrichtung aus einer anderen Perspektive. Neben den bereits oben beschriebenen Merkmalen, finden sich in der Figur 4 neue Merkmal angezeigt. So findet sich an dem Gurt 3 eingefädelt ein Gegengewicht 22, der bei einigen Anwendungen notwendig ist. Dieses Gegengewicht 22 ist hier eingefädelt gezeigt, was dem Stand der Technik entspricht.

Weiter findet sich ein auf den Gurt 3 aufgezogener RFID-Tag 21. Auch ist der Schlüssel 17 gezeigt. Dabei zuletzt finden sich drei Nummernschilder 20, welche beiielsweise zur Identifizierung eines Tiers oder bestimmter Eigenschaften des Tieres dienen. Der RFID-Tag 21 kann in einem anderen Ausführungsbeispiel auch in der Elektronik 1 integriert sein. Die Ausführungen aus den Figuren 1 bis 3 gelten auch für die Figuren 4 und 5. Insbesondere, wenn die gleichen Bezugszahlen genutzt werden.

Figur 5 zeigt die Tiervorrichtung in Ruhelage. Dabei ist die Elektronik 1 von dem Gurt 3 getrennt, wobei das erste Teil 4 und das zweite Teil 5 hier entsprechend voneinander getrennt dargestellt sind. Dies kann vorteilhaft erfolgen, ohne dass die Tiervorrichtung an dem Gegengewicht 22 oder die Nummernschilder 20, oder an dem RFID-Tag 21 vorbei herausgefädelt werden muss. Dies ist eine vorteilhafte Arbeitserleichterung für den Nutzer.

**Bezugszeichenliste**

| | |
|---|---|
| 1 | Elektronik |
| 2 | Gurthalterung |
| 3 | Gurt |
| 4 | Erstes Teil |
| 5 | Zweites Teil |
| 6 | Gurteinschubmulde |
| 7 | Erste Gurtführung |
| 8 | Zweite Gurtführung |
| 9 | Unterbrechung |
| 10 | Druckstück |
| 11 | Verschlusssteg |
| 12 | Clipsverschluss |
| 13 | Führungssteg |
| 14 | Clipsöffnung |
| 15 | Stiftaufnahme |
| 16 | Führungsstift |
| 17 | Schlüssel |
| 18 | Kreisausnehmung |
| 19 | U-Ausnehmung |
| 20 | Nummernschild |
| 21 | RFID-Tag |
| 22 | Gegengewicht |
| 23 | Gurtschnalle |
| 24 | |
| 25 | |
| 26 | |
| 27 | |
| 28 | |
| 29 | |
| 30 | |
| 31 | |
| 32 | |
| 33 | |

## Patentansprüche

1. Tiervorrichtung mit einer Elektronik (1), wobei die Elektronik (1) eine Gurthalterung (2) und einen Gurt (3) umfasst,
**dadurch gekennzeichnet, dass**
die Gurthalterung (2) aus einem ersten Teil (4) und einem zweiten Teil (5) besteht, wobei das erste Teil (4) eine Gurteinschubmulde (6) aufweist, in welcher der Gurt (3) aufnehmbar ist, wobei das zweite Teil (5) komplementär zu dem ersten Teil (4) ausgebildet ist und in Arbeitslage die Gurteinschubmulde (6) verschliesst.

2. Tiervorrichtung nach Anspruch 1, dadurch gekennzeichent, dass das erste Teil (4) aus einer ersten Gurtführung (7), einer zweiten Gurtführung (8) und einer zwischen den beiden Gurtführungen (7, 8) liegenden Unterbrechung (9) besteht.

3. Tiervorrichtung nach einem der vorigen Ansprüche, **dadurch gekennzeichnet, dass** das zweite Teil (5) T-förmig und aus einem Druckstück (10) und einem mittig an dem Druckstück (10) im rechten Winkel angeordneten Verschlusssteg (11), wobei an dem Verschlusssteg (11) andernends des Druckstücks (10) ein Clipsverschluss (12) angeordnet ist.

4. Tiervorrichtung nach Anspruch 2, **dadurch gekennzeichnet, dass** die Gurthalterung (2) im Bereich der Unterbrechung (9) eine Clipsführung, bestehend aus zwei parallel angeordneten Führungsstegen (13), aufweist.

5. Tiervorrichtung nach Anspruch 4, **dadurch gekennzeichnet, dass** die beiden Führungsstege (13) einends in Arbeitslage mit dem Druckstück (10) in Kontakt sind und andernends eine Clipsöffnung (14) aufweisen, wobei in Arbeitslage der Clipsverschluss (12) in die Clipsöffnung (14) eingeführt ist.

6. Tiervorrichtung nach einem der vorigen Ansprüche 3 bis 5, **dadurch gekennzeichnet, dass** die beiden Gurtführungen (7, 8) jeweils eine Sitftaufnahme (15) aufweisen, welche mit Führungsstiften (16) des Druckstücks (10) in Arbeitslage verbindbar sind.

7. Tiervorrichtung nach einem der vorigen Ansprüche, **dadurch gekennzeichnet, dass** ein Schlüssel (17) vorhanden ist, welche den Clipsverschluss (12) in Arbeitslage löst und in Ruhelage bringt.

8. Tiervorrichtung nach Anspruch 7, **dadurch gekennzeichnet, dass** der Schlüssel (17) eine Kreisausnehmung (18) und eine U-Ausnehmung (19) aufweist.
